# EUROPEAN PATENT APPLICATION

(11) **EP 4 748 581 A1**
(43) Date of publication of application: **27.05.2026**
(21) Application number: 25218497.3
(22) Date of filing: 25.11.2025
(51) Int. Cl.: B41J 3/407, B41J 11/00, B41J 29/17, B08B 1/20, B08B 1/34, B08B 1/40, B65G 45/22

(54) **RECORDING DEVICE**

(30) Priority: 25.11.2024 JP 2024204490
(71) Applicant: Seiko Epson Corporation, Tokyo 160-8801 (JP)
(72) Inventor: KOJIMA, Kenji, Suwa-shi, 392-8502 (JP)
(74) Representative: Lewis Silkin LLP

(57) **Abstract**

A recording device 1 includes a transport belt that includes an adhesive layer configured to adhere a fabric and that transports the fabric adhered to the adhesive layer; a recording section that performs recording by ejecting pigment ink onto the fabric being transported; an application section that applies, to the adhesive layer, a first washing liquid having a characteristic of swelling the adhesive layer; and a washing mechanism that is arranged ahead of the application section in a traveling direction of the transport belt and that washes the adhesive layer with a second washing liquid not having the characteristic.

## Description

The present application is based on, and claims priority from JP Application Serial Number 2024-204490, filed November 25, 2024, the disclosure of which is hereby incorporated by reference herein in its entirety.

### BACKGROUND

### 1. Technical Field

The present disclosure relates to a recording device.

### 2. Related Art

In the related art, a recording device that performs printing by ejecting liquid such as ink onto a medium such as paper or a fabric has been known. For example, JP-A-2015-155179 discloses a recording device including a transport belt that transports a fabric that is a recording medium, and a washing section that washes the transport belt.

However, the device described in JP-A-2015-155179 has a problem that it is difficult to improve an operation rate. Specifically, when a pigment is used as a color material of ink, a component containing the pigment may deposit to a surface of the transport belt to form a pigment coating. A pigment coating is difficult to remove with washing liquid such as water or a surfactant, and the above device does not disclose a removal unit for the pigment coating. Removal of a grown pigment coating requires maintenance work, and there is a possibility that downtime of the device becomes long. That is, there has been a demand for a recording device that shortens downtime due to maintenance work or the like and improves an operation rate.

### SUMMARY

A recording device includes a transport belt that includes an adhesive layer configured to adhere a fabric and that transports the fabric adhered to the adhesive layer; a recording section that performs recording by ejecting pigment ink onto the fabric being transported; an application section that applies, to the adhesive layer, a first washing liquid having a characteristic of swelling the adhesive layer; and a washing mechanism that is arranged downstream of the application section in a transport direction of the fabric and that washes the adhesive layer with a second washing liquid not having the characteristic.

### BRIEF DESCRIPTION OF THE DRAWINGS

FIG. 1 is a schematic diagram illustrating a configuration of a recording device according to an embodiment.
FIG. 2 is a schematic diagram illustrating a configuration of an application section and a washing mechanism.

### DESCRIPTION OF EMBODIMENTS

In the embodiment described below, a recording device 1 used for digital textile printing of a fabric is exemplified and described with reference to the drawings. The application of the recording device of the present disclosure is not limited to textile printing.

In the following drawings, XYZ axes which are coordinate axes orthogonal to each other are given, a direction indicated by each arrow is a + direction, and a direction opposite to the + direction is a - direction. When the recording device 1 is installed on a horizontal surface such as a floor, a -Z direction is a vertical direction. A +Z direction may be referred to as an upward direction, and the -Z direction may be referred to as a downward direction. For convenience of illustration, the size of each member differs from the actual size.

In a transport path of a fabric that is a recording medium, is unwound from an original fabric, is printed, and is wound into a roll, an original fabric side may be referred to as upstream, and a side on which the fabric is wound may be referred to as downstream. Further, a direction in which a fabric is transported from upstream to downstream is defined as a transport direction.

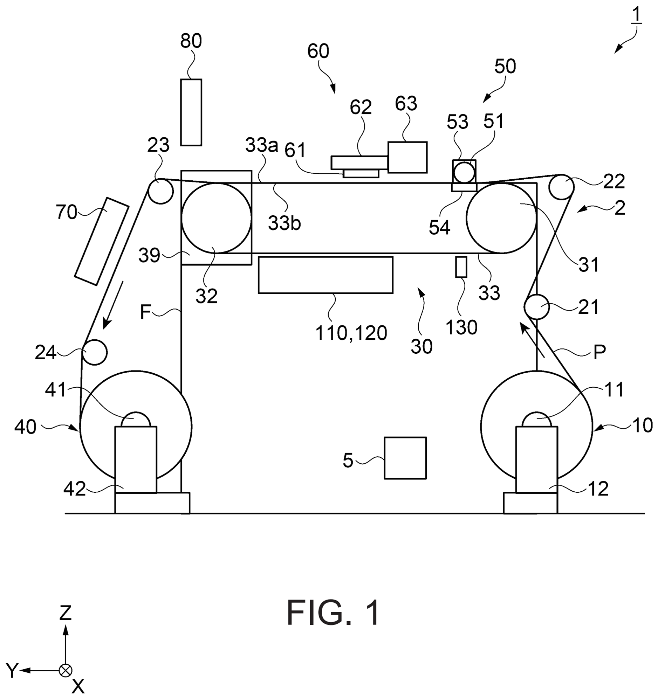

As illustrated in FIG. 1, the recording device 1 according to the present embodiment includes a control section 5, a medium convey section 2, a recording section 60, a drying section 70, a winding section 40, an operation panel 80, an application section 110, a washing mechanism 120, and a detection section 130. The recording device 1 also includes a housing (not illustrated). The configurations of the recording device 1 are supported by a frame F.

The recording device 1 causes pigment ink or the like to deposit to a fabric P, and forms an image such as a picture, a photograph, a text, or a pattern on the fabric P to manufacture a printed material. In the description of FIG. 1, a state viewed from a -X direction will be described unless otherwise specified.

The control section 5 is electrically connected to each configuration of the recording device 1 and integrally controls an operation of each configuration. Although details will be described later, the control section 5 particularly performs control related to the application section 110 and the washing mechanism 120.

The control section 5 includes hardware such as a central processing unit (CPU), a read only memory (ROM), and a random access memory (RAM). The control section 5 executes a predetermined control program by the CPU. The ROM is a nonvolatile storage device and stores a control program executed by the CPU and data processed by the control program. The RAM constitutes a work area of the CPU. The CPU loads a control program read from the ROM or the like into the RAM and executes the loaded control program.

The operation panel 80 is also electrically connected to the control section 5. The operation panel 80 notifies a user of the recording device 1 of various types of information, and receives various operations and various settings input by the user. The control section 5 controls the recording device 1 also based on information input to the operation panel 80. In the following description, a user of the recording device 1 is also simply referred to as a user.

The operation panel 80 is supported by the frame F via a member (not illustrated) and is arranged above the recording device 1 at an end section in a +Y direction. A user stands in the +Y direction of the recording device 1 and performs various inputs while viewing the operation panel 80. The operation panel 80 is, for example, a touch panel type liquid crystal display. The operation panel 80 may include a sound generating device and a physical button in addition to a display device such as a liquid crystal display. The operation panel 80 is an example of a notification section of the present disclosure.

The medium convey section 2 includes a medium feed section 10, convey rollers 21, 22, 23, and 24, a transport mechanism 30, and the winding section 40. The medium convey section 2 conveys the fabric P along the transport path from upstream to downstream.

The medium feed section 10 includes a feed shaft section 11, bearing sections 12, and a rotation drive section (not illustrated). The feed shaft section 11 has a substantially cylindrical shape and holds a core of an original fabric of the fabric P. The bearing sections 12 detachably and rotatably support both ends of the feed shaft section 11 in a direction along an X-axis.

The rotation drive section is, for example, an electric motor, and rotationally drives the feed shaft section 11. The fabric P is unwound from an original fabric and fed downstream by the rotation of the feed shaft section 11 and a belt rotation roller 32 of the transport mechanism 30 (to be described later).

The fabric P is conveyed from the medium feed section 10, passes through the convey roller 21, and the transport direction is changed to the substantially +Y direction by the convey roller 22. The fabric P is delivered to the transport mechanism 30 from substantially a - Y direction.

Examples of fibers that are the material for fabric P include natural fibers such as cotton, silk, hemp, mohair, wool, and cashmere, regenerated fibers such as rayon and cupra, and synthetic fibers such as nylon, polyester, and polyurethane, in single yarn, double yarn, or blended form. The fabric P is obtained by processing the above-described fibers into a woven fabric or a nonwoven fabric. In order to improve various characteristics of a fabric product produced from the printed fabric P, the fabric P may be subjected to a processing step in advance.

The transport mechanism 30 includes belt rotation rollers 31 and 32, a transport belt 33, and a pressure-bonding section 50.

The transport belt 33 is positioned between the convey roller 22 and the convey roller 23, and transports the fabric P. The transport belt 33 is an endless belt, and is stretched by the belt rotation rollers 31 and 32 in a region including a position facing the recording section 60 in an up and down direction. The transport belt 33 includes an outer peripheral surface 33a and an inner peripheral surface 33b. The outer peripheral surface 33a and the inner peripheral surface 33b are in a front-back relationship. The fabric P can be supported on the outer peripheral surface 33a.

The transport belt 33 includes an adhesive layer (not illustrated) on the outer peripheral surface 33a. The adhesive layer has an adhesive force to the fabric P, and the fabric P can be adhered to the adhesive layer. The adhesive layer is provided over the entire periphery of the outer peripheral surface 33a. The transport belt 33 is driven to rotate counterclockwise by the belt rotation rollers 31 and 32 in a state where the fabric P is adhered to the adhesive layer. By this, the fabric P is transported in the transport direction. The transport direction of the fabric P in the transport belt 33 is the +Y direction.

In a direction along the X-axis, a width of the transport belt 33 is wider than a width of the fabric P. A direction intersecting the transport direction is referred to as a width direction of the transport belt 33. In the present embodiment, the width direction of the transport belt 33 is a direction along the X-axis. Hereinafter, the width direction of the transport belt 33 may be simply referred to as a width direction.

The belt rotation rollers 31 and 32 are substantially cylindrical rotation members and are paired with each other. The belt rotation rollers 31 and 32 are each rotatable about a rotation shaft along the X-axis. The belt rotation roller 31 and the belt rotation roller 32 are arranged to face each other in a direction along a Y-axis. The belt rotation roller 31 is arranged upstream of the transport mechanism 30 and in the vicinity of the convey roller 22 in the +Y direction. The belt rotation roller 32 is arranged downstream of the transport mechanism 30 and in the vicinity of the convey roller 23 in the -Y direction. A support member that supports the transport belt 33 may be arranged between the belt rotation roller 31 and the belt rotation roller 32.

The belt rotation roller 31 is a driven roller that rotates counterclockwise when the rotation of the belt rotation roller 32 is transmitted via the transport belt 33. The belt rotation roller 31 is rotatably supported by a roller support member (not illustrated).

The belt rotation roller 32 is rotationally driven counterclockwise by a transport drive motor (not illustrated). The transport drive motor is controlled by the control section 5. The belt rotation roller 32 is rotatably supported by a roller support section 39.

The fabric P is delivered from the convey roller 22 to the transport mechanism 30 and is supported on the outer peripheral surface 33a of the transport belt 33 above the belt rotation roller 31. At this time, the fabric P may not be in close contact with the outer peripheral surface 33a.

The outer peripheral surface 33a supports the fabric P from below. The inner peripheral surface 33b is in contact with the belt rotation roller 31 and the belt rotation roller 32. The transport belt 33 is rotationally driven by a frictional force between the inner peripheral surface 33b and the belt rotation roller 32. The belt rotation roller 31 is driven by a frictional force between the inner peripheral surface 33b and the belt rotation roller 31.

In a direction along the X-axis, which is the width direction, a width of the adhesive layer on of the outer peripheral surface 33a is substantially equal to the width of the transport belt 33. A path of the transport belt 33 from the belt rotation roller 31 to the belt rotation roller 32 is the transport path of the fabric P. A path in which the transport belt 33 is turned back at the belt rotation roller 32 and is directed to the belt rotation roller 31 is defined as a non-transport path. The outer peripheral surface 33a faces upward in the transport path and faces downward in the non-transport path.

The adhesive layer on the outer peripheral surface 33a adheres the fabric P by an adhesive force. The adhesive layer includes an adhesive material having an adhesive force, such as a silicone resin, an acrylic resin, or a urethane resin. In the recording device 1, an acrylic resin is used as a base material of the adhesive layer. Examples of the acrylic resin include known acrylic resins such as polybutyl acrylate.

The pressure-bonding section 50 is arranged in the vicinity of the belt rotation roller 31 in the +Y direction. The pressure-bonding section 50 includes a pressing roller 51, a pair of support sections 53, a heating section 54, and a pair of drive sections (not illustrated). The pressure-bonding section 50 bonds the fabric P and the adhesive layer of the transport belt 33 by pressure bonding, and adheres the fabric P to the adhesive layer.

The pressing roller 51 is a substantially cylindrical rotation member. The pressing roller 51 includes a rotation shaft along the X-axis and is arranged above the transport belt 33. The support sections 53 are arranged at both ends of the pressing roller 51 in a direction along the X-axis. The pressing roller 51 is rotatably supported by the pair of support sections 53. Each of the pair of support sections 53 is supported by the drive section. In a direction along the X-axis, a length of the pressing roller 51 is substantially equal to the width of the transport belt 33.

One of the drive sections is arranged at a position further in a -X direction with respect to the support section 53 that supports an end section of the pressing roller 51 in the - X direction. An other of the drive sections is arranged at a position further in a +X direction with respect to the support section 53 that supports an end section of the pressing roller 51 in the +X direction.

The pair of drive sections moves in the up and down direction by a raising and lowering drive motor (not illustrated) while supporting the pair of support sections 53. Therefore, the pressing roller 51 can be displaced in the up and down direction while being supported by the support sections 53. By this, the strength of a pressing force with which the pressing roller 51 presses the fabric P against the adhesive layer on the outer peripheral surface 33a is adjusted.

Although not illustrated, the pair of drive sections also reciprocates in a direction along the Y-axis while supporting the pair of support sections 53 by driving a guide member and a motor. Therefore, the pressing roller 51 is supported by the support sections 53 and can reciprocate in a direction along the Y-axis.

The heating section 54 heats the transport belt 33. The heating section 54 is arranged below the pressing roller 51 with the transport belt 33 interposed therebetween. An upper surface of the heating section 54 is formed in a substantially flat shape and is in contact with the inner peripheral surface 33b of the lower section of the transport belt 33 in the transport path. The distance of the heating section 54 in a direction along the Y-axis is substantially equal to the distance by which the pressing roller 51 reciprocates in the transport direction and a reverse transport direction. The distance of the heating section 54 in a direction along the X-axis is substantially equal to a length of the transport belt 33 in the width direction.

The heating section 54 is, for example, an electric heater. The adhesive layer on the outer peripheral surface 33a of the transport belt 33 is heated by the heating section 54. The adhesive layer is increased in flexibility by heating, and an adhesive force to the fabric P is increased. The heating temperature by the heating section 54 is, for example, 35 °C or more and 60 °C or less on the upper surface of the heating section 54.

In the pressure-bonding section 50, the fabric P is supported on the upper surface of the heating section 54 via the transport belt 33. The heating section 54 heats the transport belt 33, and the pressing roller 51 presses the fabric P against the adhesive layer from above. In parallel with this, the pressing roller 51 reciprocates in the +Y direction and the -Y direction while rotating. The fabric P and the transport belt 33 are sandwiched and pressed between the upper surface of the heating section 54 and the pressing roller 51, so that the fabric P and the outer peripheral surface 33a are in close contact with each other. The fabric P passes through the pressure-bonding section 50 and is transported in the +Y direction while being in close contact with the transport belt 33. Instead of the heating section 54, the pressing roller 51 may have a function of heating the transport belt 33. The heating section 54 may be omitted depending on a type of the fabric P and a characteristic of the adhesive layer.

As a configuration in which the pressing roller 51 has a function of heating the transport belt 33, a following heat roller type is exemplified. The heat roller type includes a support plate having substantially the same shape as the heating section 54, a heat roller having the same shape as the pressing roller 51, the pair of support sections 53, and the pair of drive sections. That is, the heat roller type operates in the same manner as the pressure-bonding section 50 except that a heating function of the heating section 54 is performed by the heat roller.

The recording section 60 faces the outer peripheral surface 33a and the fabric P in the up and down direction in the middle of the transport belt 33 in a direction along the Y-axis. The recording section 60 performs recording by ejecting and depositing pigment ink or the like to the fabric P transported by the transport belt 33. By this, the fabric P is printed. The recording section 60 includes an ejection section 61 that is an inkjet head, a carriage 62, and a guide rail 63.

The guide rail 63 is a structural member extending along the X-axis, and is arranged above the transport mechanism 30. The guide rail 63 supports the carriage 62 so as to be movable in a direction along the X-axis. The carriage 62 is supported by the guide rail 63 and reciprocates in the direction along the X-axis by the driving of a carriage drive motor (not illustrated). The ejection section 61 is attached below the carriage 62, and reciprocates in the direction along the X-axis with respect to the transport belt 33 together with the carriage 62.

The ejection section 61 ejects and deposits pigment ink, functional liquid, and the like to the fabric P supported on the outer peripheral surface 33a and transported. The ejection section 61 includes a nozzle surface (not illustrated) at a position facing downward. The nozzle surface faces the transport belt 33 and the fabric P in the up and down direction. A plurality of nozzle arrays are arranged on the nozzle surface. Each of the plurality of nozzle arrays is composed of a plurality of nozzles. Each of the plurality of nozzle arrays individually ejects a plurality of types of pigment ink exhibiting colors such as cyan, magenta, yellow, and black, and functional liquid to the fabric P. Examples of pigment ink include water-based ink and non-water-based ink. In the present embodiment, water-based pigment ink is applied.

In the ejection section 61, a piezoelectric element is used as an actuator that is a drive unit. The drive unit is not limited to this. The drive unit may include, for example, an electromechanical conversion element that displaces a diaphragm as an actuator by electrostatic attraction, or an electrothermal conversion element that ejects ink as droplets by air bubbles generated by heating.

Although not illustrated, pigment ink and functional liquid are each supplied from an ink tank to the ejection section 61 via an ink pipe. Pigment ink and functional liquid ejected from the ejection section 61 deposit to a surface of the fabric P facing upward.

The fabric P is transported in the +Y direction by the transport belt 33 while the ejection section 61 is reciprocated in the direction along the X-axis. At this time, pigment ink or the like is deposited to the fabric P from the ejection section 61 at a predetermined timing. By this, a desired image or the like is formed on the fabric P.

Functional liquid is specifically softener or pretreatment liquid. Functional liquid is ejected onto the fabric P at the same time as or before or after pigment ink is ejected.

Softener has a function of improving the texture of a fabric product when the printed fabric P is processed into a fabric product such as a garment. Softener is not particularly limited, and a known softening agent or the like can be applied. When softener contains a cationic component or the like, the cationic component may react with a component of pigment ink to generate aggregates. Therefore, it is desirable to avoid contact or mixing of softener with pigment ink.

Pretreatment liquid has a function of aggregating a pigment, a resin, and the like in pigment ink on a surface of the fabric P to improve the color development of a printed material. Such a pretreatment liquid is not particularly limited, and a known treatment agent or the like can be applied. Since pretreatment liquid causes a pigment to aggregate, it is desirable to avoid contact or mixing of pretreatment liquid and pigment ink for purposes other than the intended purpose.

As functional liquid, other functional liquid other than softener and pretreatment liquid may be applied. Examples of other functional liquid include coating liquid that improves the abrasion resistance and the washing fastness of the printed fabric P, and a permeating liquid that assists the permeation of pigment ink into the fabric P.

In the ejection section 61, preliminary ejection is performed in a stage before ejection of pigment ink and functional liquid to the fabric P, in an interval between ejections, and the like. Preliminary ejection is performed for purpose of suppressing drying or adhesion of pigment ink or functional liquid at the gas-liquid interface in each nozzle of the ejection section 61, preventing color mixing after cleaning of each nozzle, and the like. The execution of preliminary ejection is controlled by the control section 5. The timing of performing preliminary ejection, the time interval, amounts of pigment ink and functional liquid to be preliminarily ejected, and the like are appropriately set according to types and characteristics of pigment ink and functional liquid.

The fabric P on which textile printing is performed is further transported in the +Y direction from a position facing the recording section 60. Then, the fabric P is peeled off from the transport belt 33 substantially above the belt rotation roller 32, and is delivered to the convey roller 23 downstream of the belt rotation roller 32.

The transport belt 33 is turned back from the transport path to the non-transport path by the belt rotation roller 32, and advances in the -Y direction in a state where the outer peripheral surface 33a faces downward. That is, in the non-transport path, a traveling direction of the transport belt 33 is the -Y direction.

Since the adhesive layer is arranged on the outer peripheral surface 33a of the transport belt 33, and the fabric P is transported in close contact with the adhesive layer, dirt such as pigment ink, lint of the fabric P, and foreign matter are likely to deposit to the adhesive layer. When the adhesive layer is significantly contaminated, the fabric P may be contaminated when the transport belt 33 rotates and comes into contact with the fabric P before printing again. There is a possibility that an adhesive force of the adhesive layer may be reduced due to dirt.

In particular, a part of pigment ink and functional liquid may pass through the fabric P and reach the adhesive layer, and form a pigment coating on a surface of the adhesive layer. In addition, a fixing resin is added to pigment ink in many cases in order to improve the fixability to the fabric P. These factors may make it easier for pigment coating to form on the adhesive layer. When pretreatment liquid is used as functional liquid, aggregation of a pigment or the like is promoted, and formation of a pigment coating may proceed.

When formation of a pigment coating or deposit of dirt becomes remarkable, an adhesive force of the adhesive layer is reduced, and the transport of the fabric P may be hindered. In such a case, maintenance work such as reattaching the adhesive layer or replacing the transport belt 33 is performed. Since maintenance work such as reattaching the adhesive layer is performed while an operation of the recording device 1 is stopped, this has been a factor in reducing an operation rate of the recording device 1. In contrast, the recording device 1 removes dirt of the adhesive layer by the application section 110 and the washing mechanism 120, and reduces the frequency of maintenance work.

The application section 110 and the washing mechanism 120 are arranged below the transport belt 33 in the non-transport path. The washing mechanism 120 is arranged ahead of the application section 110 in the traveling direction of the transport belt 33. Details of configurations and functions of the application section 110 and the washing mechanism 120 will be described later.

The detection section 130 is arranged between the washing mechanism 120 and the belt rotation roller 31 in the non-transport path of the transport belt 33. The detection section 130 detects an adhesive force of the adhesive layer of the transport belt 33. The detection section 130 is electrically connected to the control section 5. Information on an adhesive force of the adhesive layer detected by the detection section 130 is transmitted to the control section 5. The detection section 130 enables monitoring of an adhesive force of the adhesive layer, in other words, a contamination degree of the adhesive layer.

As the detection section 130, a known adhesive force measuring device can be applied. The arrangement of the detection section 130 is not limited to the arrangement between the washing mechanism 120 and the belt rotation roller 31. The detection section of the present disclosure is not limited to an adhesive force measuring device. The detection section of the present disclosure may be, for example, a mechanism that calculates an adhesive force from a peeling angle of the fabric P peeled by the belt rotation roller 32. Alternatively, the detection section of the present disclosure may be a mechanism that calculates an adhesive force from the rotational resistance of the transport drive motor that rotationally drives the belt rotation roller 32.

The transport belt 33 is turned back from the non-transport path to the transport path by the belt rotation roller 31, and moves in the +Y direction in a state where the outer peripheral surface 33a faces upward. In this way, the transport belt 33 rotates counterclockwise.

The convey roller 23 peels the fabric P on which textile printing is performed from the transport belt 33. The fabric P peeled off from the transport belt 33 is transported in the substantially +Y direction, and the transport direction is changed to the substantially downward direction by the convey roller 23. The convey rollers 23 and 24 relay the fabric P to the winding section 40.

The drying section 70 is arranged between the convey roller 23 and the convey roller 24. The drying section 70 dries pigment ink and functional liquid deposited to the fabric P. The drying section 70 includes, for example, an infrared heater. The volatile components contained in pigment ink and functional liquid deposited to the fabric P are volatilized by infrared rays radiated by the infrared heater. By this, droplets of pigment ink and functional liquid are dried, and the fabric P can be wound by the winding section 40. The fabric P passes through the convey roller 24 and advances to the winding section 40.

The winding section 40 is arranged downstream and below the convey roller 24. The winding section 40 collects a printed material that is the printed fabric P. The winding section 40 includes a winding shaft section 41, bearing sections 42, and a rotation drive section (not illustrated). The winding shaft section 41 has a substantially cylindrical shape and winds a printed material in a roll shape. The bearing sections 42 rotatably supports both ends of the winding shaft section 41 in a direction along the X-axis. The winding shaft section 41 is attachable to and detachable from the bearing sections 42. The rotation drive section rotates the winding shaft section 41 counterclockwise. The winding shaft section 41 is rotated by the rotation drive section, and a printed material is wound. As described above, a printed material is manufactured by the recording device 1.

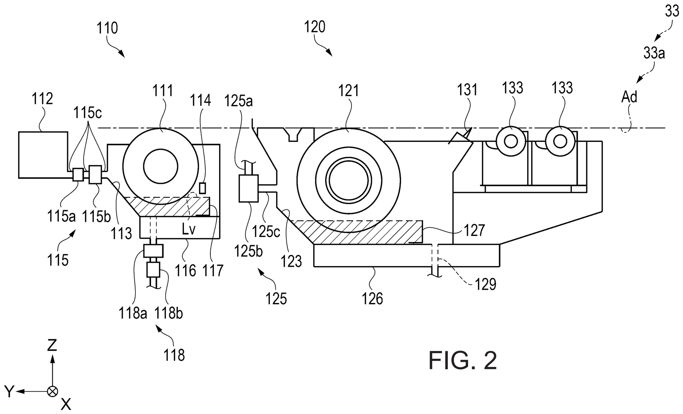

As illustrated in FIG. 2, the application section 110 and the washing mechanism 120 are arranged below the transport belt 33 in the non-transport path, and face an adhesive layer Ad of the outer peripheral surface 33a in the up and down direction. In FIG. 2, the transport belt 33 in the non-transport path is indicated by one dot chain line. In the non-transport path, the traveling direction of the transport belt 33 is the -Y direction.

The application section 110 and the washing mechanism 120 are arranged side by side along the Y-axis. The application section 110 is positioned in the +Y direction with respect to the washing mechanism 120. By this, the transport belt 33 passes through a position corresponding to the application section 110 and then a position corresponding to the washing mechanism 120 in this order in the non-transport path. The application section 110 applies the adhesive layer Ad with a first washing liquid. The washing mechanism 120 washes the adhesive layer Ad with a second washing liquid.

The application section 110 includes an application member 111, a first washing liquid tank 113, and a defining section 117. The first washing liquid tank 113 is provided with a storage tank 112, a liquid amount sensor 114, a first supply section 115, a first displacement section 116, and a circulation mechanism 118. The first supply section 115 is an example of a supply section of the present disclosure.

The first washing liquid tank 113 has a bathtub shape with an open upper side, stores the first washing liquid, and applies the first washing liquid to the application member 111. The first washing liquid tank 113 is arranged below the application member 111. The first washing liquid is accumulated at a bottom of the first washing liquid tank 113. A lower part of the application member 111 is immersed in the first washing liquid stored in the first washing liquid tank 113. In a direction along the X-axis, a width of the first washing liquid tank 113 is larger than a width of the application member 111.

The first washing liquid has a characteristic of swelling the adhesive layer Ad. The first washing liquid is, for example, an organic solvent, and is selected according to the material of the adhesive layer Ad, a type of pigment ink applied to the recording device 1, and the like. The first washing liquid swells the adhesive layer Ad, and thus, a pigment coating and dirt deposited to a surface of the adhesive layer Ad are lifted up and easily removed.

The first washing liquid desirably does not dissolve the adhesive layer Ad. That is, it is desirable that the first washing liquid has a relatively low dissolving power with respect to a resin that is the base material of the adhesive layer Ad. The first washing liquid having a low dissolving power suppresses deterioration of the adhesive layer Ad.

The first washing liquid is not particularly limited, and examples thereof include alcohol-based or glycol ether-based organic solvents such as (2-methoxyethoxy) propanol (also referred to as dipropylene glycol monomethyl ether), 2-butoxyethanol, ethoxylated propoxylated alcohol (C=16 to 18), 3-methoxy-3-methylbutanol, and (R)-4-isopropenyl-1-methylcyclohex-1-ene. The first washing liquid may contain additives such as water and an defoaming agent in addition to the organic solvent.

The first washing liquid desirably does not contain a surfactant. This suppresses foaming by the first washing liquid.

The storage tank 112 is a supply source of the first washing liquid, and is a liquid accommodation container that accommodates the first washing liquid. The storage tank 112 is, for example, a resin tank. The storage tank 112 includes a lid (not illustrated), and the first washing liquid can be replenished to the storage tank 112 by opening the lid. The storage tank 112 is sealed by closing the lid.

Since a user only needs to replenish the storage tank 112 with the first washing liquid, the convenience of the user is improved. Since the storage tank 112 functions as a buffer tank, it is possible to replenish the first washing liquid to the storage tank 112 while consuming the first washing liquid by the application section 110.

The first supply section 115 supplies the first washing liquid from the storage tank 112 to the first washing liquid tank 113. The first supply section 115 includes a liquid feed pump 115a, an opening and closing section 115b, and a supply pipe 115c. The inside of the storage tank 112 and the inside of the first washing liquid tank 113 are connected by the supply pipe 115c. In the middle of the supply pipe 115c, the liquid feed pump 115a is arranged closer to the storage tank 112, and the opening and closing section 115b is arranged closer to the first washing liquid tank 113. The first washing liquid flows through the storage tank 112, the liquid feed pump 115a, and the opening and closing section 115b in this order via the supply pipe 115c.

The liquid feed pump 115a feeds the first washing liquid accommodated in the storage tank 112 to the opening and closing section 115b. A known liquid pump can be applied to the liquid feed pump 115a.

The opening and closing section 115b changes a supply amount of the first washing liquid supplied to the first washing liquid tank 113. The opening and closing section 115b feeds the first washing liquid whose supply amount is adjusted to the first washing liquid tank 113 via the supply pipe 115c.

The opening degree of a valve (not illustrated) in the opening and closing section 115b can be arbitrarily changed between full open and full close. The opening degree of the valve of the opening and closing section 115b is controlled by the control section 5. That is, the control section 5 controls the opening and closing section 115b to adjust a supply amount of the first washing liquid supplied to the first washing liquid tank 113. This improves the convenience of a user compared to a case where the user manually adjusts a supply amount. A known valve mechanism such as an electromagnetic valve is applied to the valve of the opening and closing section 115b.

The supply pipe 115c is connected to a side wall of the first washing liquid tank 113 in the +Y direction. The first washing liquid flows along the side wall of the first washing liquid tank 113 in the +Y direction and the like and is accumulated on a bottom of the first washing liquid tank 113. The arrangement of the configurations of the first supply section 115 described above is an example and is not limited to the above.

The defining section 117 defines the volume of the first washing liquid stored in the first washing liquid tank 113. The defining section 117 is arranged on a bottom of the first washing liquid tank 113 so as to be close to the -Y direction. The defining section 117 is a plate-shaped partition member. The defining section 117 protrudes upward from a bottom of the first washing liquid tank 113 along an XZ plane. The first washing liquid is stored in a region defined by the side wall and a bottom of the first washing liquid tank 113 and the defining section 117.

In FIG. 2, the region is hatched with oblique lines. FIG. 2 shows a state in which the first washing liquid is at a liquid level Lv, and the liquid level Lv is a liquid level when the first washing liquid is fully stored under a condition in which the application member 111 is immersed in the first washing liquid tank 113. When the first washing liquid is further supplied from the state where the first washing liquid is at the liquid level Lv, the first washing liquid climbs over the defining section 117 and overflows in the -Y direction. The overflowing washing liquid is discharged from a discharge mechanism (not illustrated) to the outside of the application section 110. The first washing liquid discharged from the discharge mechanism may be recovered to a waste liquid tank or the like, or may be circulated and reused.

The liquid amount sensor 114 detects the height of a liquid surface of the first washing liquid stored in the first washing liquid tank 113, that is, a storage amount. The liquid amount sensor 114 is a known contact type or non-contact type liquid level sensor. A position of a liquid surface including the liquid level Lv in the up and down direction, that is, a storage amount of the first washing liquid in the first washing liquid tank 113 is detected by the liquid amount sensor 114. The liquid amount sensor 114 is electrically connected to the control section 5. Here, in the following description, a storage amount of the first washing liquid stored in the first washing liquid tank 113 is also simply referred to as a storage amount of the first washing liquid tank 113.

Information on a storage amount of the first washing liquid tank 113 detected by the liquid amount sensor 114 is transmitted to the control section 5. The control section 5 can adjust a storage amount of the first washing liquid tank 113 by controlling the first supply section 115 and the circulation mechanism 118 (to be described later).

When operating the application section 110 to apply the first washing liquid to the adhesive layer Ad, a storage amount of the first washing liquid tank 113 is desirably an amount that does not cause the first washing liquid to overflow, and is more desirably set to the liquid level Lv. By operating the application section 110 without causing the first washing liquid to overflow, a consumption amount of the first washing liquid can be suppressed. When a pigment coating or dirt deposited to the adhesive layer Ad is remarkable, the application section 110 may be operated by causing the first washing liquid to overflow while supplying the first washing liquid from the first supply section 115.

The composition of the first washing liquid stored in the first washing liquid tank 113, that is, the concentration of the first washing liquid is adjusted by adding water or the like to the first washing liquid in the storage tank 112. The first washing liquid may be used as an undiluted solution without being diluted with water or the like.

The application member 111 applies the first washing liquid in the first washing liquid tank 113 to the adhesive layer Ad. The application member 111 is a substantially cylindrical sponge member having a central axis along the X-axis. In a direction along the X-axis, the width of the application member 111 is equal to or larger than a width of the adhesive layer Ad. Although not illustrated, a support member and a drive motor are attached to the application member 111. The application member 111 is supported by the support member, and a part of a lower part thereof is immersed in the first washing liquid in the first washing liquid tank 113. By this, the application member 111 absorbs and contains the first washing liquid, and is rotationally driven by the drive motor to rotate counterclockwise about the central axis.

The application member 111 contacts the adhesive layer Ad while rotating in a state of containing the first washing liquid, and applies the first washing liquid to the adhesive layer Ad. As described above, since the length of the application member 111 is equal to or longer than the length of the adhesive layer Ad in a direction along the X-axis, the first washing liquid is applied to the entire region of the adhesive layer Ad in the width direction by the contact of the application member 111. When the first washing liquid is applied, the adhesive layer Ad is swelled, and a pigment coating and dirt depositing to the adhesive layer Ad are lifted up and easily removed.

In the present embodiment, a contact type sponge member is exemplified as the application member 111, but the application member is not limited thereto. The application section 110 may apply the first washing liquid to the entire region of the adhesive layer Ad in the width direction by a contact type or a non-contact type. Specifically, as an other contact type, a substantially cylindrical brush having a shape similar to that of the application member 111 may be applied. Examples of the non-contact type include a spray device and a drop device.

In the present embodiment, the first washing liquid is applied to the application member 111 by immersing the application member 111 in the first washing liquid in the first washing liquid tank 113, but the present disclosure is not limited thereto. The first washing liquid may be applied to the application member 111 by dripping, spraying, or the like.

The circulation mechanism 118 circulates the first washing liquid stored in the first washing liquid tank 113 for reuse. The circulation mechanism 118 is connected to a region where the first washing liquid is stored at a bottom of the first washing liquid tank 113. The circulation mechanism 118 includes a filter section 118a and a circulation section 118b. In the circulation mechanism 118, the filter section 118a is arranged first, and then the circulation section 118b is arranged, in order of proximity to the first washing liquid tank 113. The first washing liquid tank 113 is connected to the filter section 118a and the circulation section 118b by pipes (not illustrated).

In the pipe, a valve mechanism (not illustrated) is provided in the vicinity of the first washing liquid tank 113. The valve mechanism switches between allowing and stopping flow of the first washing liquid from the first washing liquid tank 113 to the circulation mechanism 118.

The filter section 118a filters the first washing liquid flowing from the first washing liquid tank 113. Due to sliding between the application member 111 and the adhesive layer Ad, foreign matter such as a pigment coating or dust depositing to the adhesive layer Ad may be mixed into the first washing liquid stored in the first washing liquid tank 113. The filter section 118a recovers and removes the foreign matter by filtration. As the filter section 118a, a known filter such as a mesh or a nonwoven fabric can be applied.

The circulation section 118b circulates the first washing liquid stored in the first washing liquid tank 113. Specifically, the circulation section 118b is, for example, a known liquid feed pump, and recirculates the first washing liquid to the storage tank 112 or the first washing liquid tank 113 via a pipe. Since the first washing liquid is reused by the circulation mechanism 118, a consumption amount of the first washing liquid can be reduced. The circulation mechanism 118 also has a function of discharging the first washing liquid to the outside of the application section 110 without circulating the first washing liquid.

The first displacement section 116 changes between contact and separation of the application member 111 of the application section 110 with respect to the adhesive layer Ad of the transport belt 33. The first washing liquid is applied to the adhesive layer Ad in a state where the application member 111 is in contact with the adhesive layer Ad, and the first washing liquid is not applied to the adhesive layer Ad in a state where the application member 111 is separated from the adhesive layer Ad.

The first displacement section 116 is arranged below the first washing liquid tank 113. The first displacement section 116 is electrically connected to the control section 5. Although not illustrated, the first displacement section 116 includes a known actuator or electric motor. The first displacement section 116 is controlled by the control section 5 to displace the first washing liquid tank 113, the application member 111, and the like in the up and down direction.

FIG. 2 illustrates a state in which the application member 111 is in contact with the adhesive layer Ad. The first displacement section 116 can move the application member 111 and the like downward from the above state to separate the application member 111 from the adhesive layer Ad. When a pigment coating or dirt depositing to the adhesive layer Ad is very small, the application member 111 is separated from the adhesive layer Ad, and thus it is possible to suppress consumption of the first washing liquid or wear of the application member 111.

A region to which the first washing liquid is applied by the application section 110 advances to the washing mechanism 120 by the rotation of the transport belt 33. The first washing liquid is applied to the adhesive layer Ad, and swelling progresses while the adhesive layer Ad reaches the washing mechanism 120.

The washing mechanism 120 includes a washing member 121, a second washing liquid tank 123, a defining section 127, a wiping section 131, and wiping-off sections 133. The second washing liquid tank 123 is provided with a second supply section 125, a second displacement section 126, and a discharge section 129.

In a direction along the Y-axis, it is desirable that the interval between the application section 110 and the washing mechanism 120 is as large as possible. When the interval is relatively large, the time for swelling the adhesive layer Ad is secured by the first washing liquid applied by the application section 110.

The washing member 121, the wiping section 131, and the wiping-off sections 133 are positioned at positions where they come into contact with the adhesive layer Ad of the transport belt 33, and are arranged in the above order in the -Y direction. The adhesive layer Ad slides on the washing member 121, the wiping section 131, and the wiping-off sections 133 in this order.

The second washing liquid tank 123 has a bathtub shape with an open upper side, and stores the second washing liquid for washing the adhesive layer Ad. The second washing liquid may contain foreign matter such as pieces of a pigment coating and dirt transferred from the adhesive layer Ad by washing.

The second washing liquid tank 123 is arranged below the washing member 121. The second washing liquid is accumulated at a bottom of the second washing liquid tank 123. A lower part of the washing member 121 is immersed in the second washing liquid stored in the second washing liquid tank 123. In a direction along the X-axis, a width of the second washing liquid tank 123 is larger than a width of the washing member 121.

The second washing liquid does not have a characteristic of swelling the adhesive layer Ad. The second washing liquid is, for example, water. Examples of water include pure water such as ion-exchanged water, ultrafiltered water, reverse osmosis water, and distilled water, and tap water. In the present embodiment, tap water is used as the second washing liquid. The second washing liquid may contain an additive such as a disinfectant. From the same viewpoint as the first washing liquid, it is desirable that the second washing liquid does not contain a surfactant.

The second supply section 125 supplies the second washing liquid to the second washing liquid tank 123 of the washing mechanism 120. The second supply section 125 includes a pipe 125a, an opening and closing section 125b, and a supply pipe 125c. The pipe 125a, the opening and closing section 125b, and the supply pipe 125c are arranged in the above order toward the second washing liquid tank 123. The second washing liquid flows in the second supply section 125 in the above-described order.

The pipe 125a connects a supply source of the second washing liquid and the opening and closing section 125b. In the present embodiment, since tap water is used as the second washing liquid, the pipe 125a is connected to a tap water faucet via, for example, a flexible hose. The pipe 125a may be connected to a container similar to the storage tank 112, and the second washing liquid such as tap water may be supplied from the container.

The opening and closing section 125b changes a supply amount of the second washing liquid supplied to the second washing liquid tank 123. The opening and closing section 125b is connected to the pipe 125a and the supply pipe 125c, and feeds the second washing liquid whose supply amount is adjusted to the second washing liquid tank 123 via the supply pipe 125c.

The opening degree of a valve (not illustrated) in the opening and closing section 125b can be arbitrarily changed between full open and full close. The opening degree of the valve of the opening and closing section 125b is controlled by the control section 5. That is, the control section 5 controls the opening and closing section 125b of the second supply section 125 to adjust an amount of the second washing liquid supplied to the second washing liquid tank 123. A valve mechanism similar to that of the opening and closing section 115b of the application section 110 is applied to the valve of the opening and closing section 125b.

The supply pipe 125c connects the opening and closing section 125b and the second washing liquid tank 123. The second washing liquid supplied from the supply pipe 125c flows along a side wall of the second washing liquid tank 123 in the +Y direction and the like and is accumulated on a bottom of the second washing liquid tank 123. The arrangement of the configurations of the second supply section 125 described above is an example and is not limited to the above.

The defining section 127 defines the volume of the second washing liquid stored in the second washing liquid tank 123. The defining section 127 is arranged on a bottom of the second washing liquid tank 123 so as to be close to the -Y direction. The defining section 127 is a plate-shaped partition member. The defining section 127 protrudes upward from a bottom of the second washing liquid tank 123 along the XZ plane. The second washing liquid is stored in a region defined by the side wall and a bottom of the second washing liquid tank 123 and the defining section 127.

In FIG. 2, the region is hatched with oblique lines. FIG. 2 shows a state in which a lower part of the washing member 121 is immersed in the second washing liquid stored in the second washing liquid tank 123 and the second washing liquid is fully stored. When the second washing liquid is further supplied from the above state, the second washing liquid climbs over the defining section 127 and overflows in the -Y direction. The overflowed second washing liquid is discharged from the discharge section 129 to the outside of the second washing liquid tank 123. The second washing liquid discharged from the discharge section 129 may be accommodated in a waste liquid tank or the like.

A device for measuring the height of a liquid surface of the stored second washing liquid, that is, a liquid level, may be arranged in the second washing liquid tank 123. As the device, a device similar to the liquid amount sensor 114 of the application section 110 can be applied.

The washing member 121 washes the adhesive layer Ad of the transport belt 33. The washing member 121 is a substantially cylindrical brush member having a central axis along the X-axis. In a direction along the X-axis, the width of the washing member 121 is equal to or larger than the width of the adhesive layer Ad. Although not illustrated, a support member and a drive motor are attached to the washing member 121. The washing member 121 is supported by the support member, and a part of a lower part thereof is immersed in the second washing liquid in the second washing liquid tank 123. By this, the second washing liquid deposits to the washing member 121, and the washing member 121 is rotationally driven by the drive motor and rotates counterclockwise about the central axis.

The washing member 121 comes into contact with the adhesive layer Ad while rotating in a state where the second washing liquid is deposited, and scrapes off dirt such as a pigment coating. As described above, since the length of the washing member 121 is equal to or longer than the length of the adhesive layer Ad in the direction along the X-axis, the entire region of the adhesive layer Ad in the width direction and the washing member 121 come into contact with each other by the contact of the washing member 121. The adhesive layer Ad and the washing member 121 slide on each other in a state where the adhesive layer Ad is swelled by the application of the first washing liquid and a pigment coating and dirt are lifted up. By this, a pigment coating and dirt are scraped off and removed from the adhesive layer Ad.

Foreign matter such as a pigment coating and dirt is transferred from the adhesive layer Ad to the second washing liquid tank 123 by the rotation of the washing member 121. Specifically, after sliding on the adhesive layer Ad, the washing member 121 rotates and is immersed in the second washing liquid in the second washing liquid tank 123, and foreign matter scraped off from the adhesive layer Ad is transferred to the second washing liquid tank 123 to clean the washing member 121. The rotation of the transport belt 33 causes a region of the adhesive layer Ad that has slid against the washing member 121 to advance to the wiping section 131.

The wiping section 131 slides on the adhesive layer Ad to scrape off the second washing liquid or the like depositing to the adhesive layer Ad. The wiping section 131 is a substantially plate-shaped rubber member. The second washing liquid scraped off from a surface of the adhesive layer Ad falls downward and is discharged from the discharge section 129. The rotation of the transport belt 33 causes a region of the adhesive layer Ad that has slid against the wiping section 131 to advance to the wiping-off sections 133.

The wiping-off sections 133 absorb and remove minute amounts of the second washing liquid remaining on the adhesive layer Ad. The wiping-off section 133 is a substantially cylindrical sponge member having a central axis along the X-axis. A plurality of wiping-off sections 133 are arranged. In a direction along the X-axis, a width of each wiping-off section 133 is shorter than the width of the adhesive layer Ad. When viewed from above, the wiping-off sections 133 are arranged in a staggered manner. When the adhesive layer Ad passes through the plurality of wiping-off sections 133, the entire region of the adhesive layer Ad in a direction along the X-axis slides on any one of the wiping-off sections 133.

Each wiping-off section 133 is rotated counterclockwise by an electric motor (not illustrated). By the rotation of the transport belt 33, a region of the adhesive layer Ad that has slid against the wiping-off sections 133 passes through the above-described detection section 130 and turns back from the non-transport path to the transport path. As described above, the adhesive layer Ad of the transport belt 33 is washed.

The second displacement section 126 changes between contact and separation of the washing member 121, the wiping section 131, and the wiping-off sections 133 of the washing mechanism 120 with respect to the adhesive layer Ad of the transport belt 33. The adhesive layer Ad is washed in a state where the washing mechanism 120 is in contact with the adhesive layer Ad, and the adhesive layer Ad is not washed in a state where the washing mechanism 120 is separated from the adhesive layer Ad.

The second displacement section 126 is arranged below the second washing liquid tank 123. The second displacement section 126 is electrically connected to the control section 5. Although not illustrated, the second displacement section 126 includes a known actuator or electric motor. The second displacement section 126 is controlled by the control section 5 to displace the washing mechanism 120 in the up and down direction. The control section 5 individually controls the displacement of the first displacement section 116 and the displacement of the second displacement section 126. By this, the application section 110 and the washing mechanism 120 can be brought into contact with and separated from the adhesive layer Ad as necessary.

FIG. 2 illustrates a state in which the washing member 121, the wiping section 131, and the wiping-off sections 133 of the washing mechanism 120 are in contact with the adhesive layer Ad. The second displacement section 126 can move the washing mechanism 120 downward from the above-described state to separate the washing mechanism 120 from the adhesive layer Ad. By this, when the adhesive layer Ad does not need to be washed, the washing mechanism 120 can be separated from the adhesive layer Ad.

Note that during a recording operation in which the recording device 1 performs recording, at least the washing mechanism 120 washes the adhesive layer Ad. That is, in a case where the adhesive layer Ad is clean or the deposit of a pigment coating or the like to the adhesive layer Ad is slight and the first washing liquid does not need to be applied, the application member 111 may be separated from the adhesive layer Ad by the first displacement section 116 even during a recording operation.

Next, the control of the application section 110 and the washing mechanism 120 by the control section 5 will be described. In the following description, reference is made to FIGS. 1 and 2.

The control section 5 causes the application section 110 to apply the first washing liquid to the adhesive layer Ad during a recording operation in which the recording device 1 performs recording. At this time, the control section 5 causes the washing mechanism 120 to also wash the adhesive layer Ad. Since a pigment coating is formed on the adhesive layer Ad during the recording operation, the formation of a pigment coating can be suppressed by applying the first washing liquid during the recording operation to perform washing.

The control section 5 causes the application section 110 to apply the first washing liquid to the adhesive layer Ad in a period other than the recording operation in which the recording device 1 performs recording. At this time, the control section 5 causes the washing mechanism 120 to also wash the adhesive layer Ad. By applying the first washing liquid and performing washing before or after the recording operation, the recording operation can be started in a state where the adhesive layer Ad is clean.

The control section 5 prompts a user to replenish the first washing liquid tank 113 with the first washing liquid via the operation panel 80, which is the notification section, based on a storage amount of the first washing liquid tank 113 detected by the liquid amount sensor 114 becoming equal to or less than a threshold. A user does not need to manage a storage amount of the first washing liquid tank 113, and the convenience of the user is improved.

A method of notifying the decrease in a storage amount by the operation panel 80 is, for example, a warning sound, a voice, a character display on a liquid crystal display, or the like. The recording device 1 may include an indicator lamp in a housing (not illustrated) or the like as the notification section, and may notify the decrease in a storage amount by lighting the indicator lamp or the like.

The control section 5 may control the first supply section 115 to supply the first washing liquid to the first washing liquid tank 113 based on a storage amount of the first washing liquid tank 113 detected by the liquid amount sensor 114 becoming equal to or less than a threshold. Since the first washing liquid is automatically supplied to the first washing liquid tank 113, the convenience of a user is improved.

The threshold of the storage amount described above is, for example, 70% when the storage amount of the first washing liquid tank 113 illustrated in FIG. 2 is 100%.

The control section 5 causes the application section 110 to apply the first washing liquid to the adhesive layer Ad and causes the washing mechanism 120 to wash the adhesive layer Ad based on an adhesive force of the adhesive layer Ad detected by the detection section 130 becoming equal to or less than a threshold. As formation of a pigment coating or dirt progresses on the adhesive layer Ad, an adhesive force gradually decreases. Therefore, the first washing liquid is automatically applied to the adhesive layer Ad and washing is performed according to a degree of a pigment coating and a contamination degree. This recovers an adhesive force of the adhesive layer Ad, and suppresses deterioration of the adhesive layer Ad, thereby further improving an operation rate. Since the first washing liquid is automatically applied according to the decrease in an adhesive force, the convenience of a user is improved.

The control section 5 controls the first displacement section 116 to cause the application member 111 of the application section 110 to contact the adhesive layer Ad of the transport belt 33 and execute application of the first washing liquid to the adhesive layer Ad, and to cause the washing mechanism 120 to wash the adhesive layer Ad based on an adhesive force of the adhesive layer Ad detected by the detection section 130 becoming equal to or less than a threshold. The control section 5 controls the first displacement section 116 to cause the application member 111 of the application section 110 to separate from the adhesive layer Ad of the transport belt 33 and stop the application of the first washing liquid to the adhesive layer Ad based on an adhesive force of the adhesive layer Ad detected by the detection section 130 becoming equal to or greater than the threshold.

When an adhesive force of the adhesive layer Ad is reduced due to formation of a pigment coating or progress of dirt, the first washing liquid is automatically applied to the adhesive layer Ad. When an adhesive force is recovered by applying the first washing liquid and washing the adhesive layer Ad, the application of the first washing liquid to the adhesive layer Ad is automatically stopped. By these, the convenience of a user is improved, and the waste of the first washing liquid is suppressed.

The threshold of the adhesive force described above is, for example, 70% when an initial adhesive force of the adhesive layer Ad is 100%.

The method of applying the first washing liquid according to an adhesive force of the adhesive layer Ad has been described above, but the present disclosure is not limited thereto. The control section 5 may change between application and stop of the first washing liquid according to the time during which the recording device 1 is operated. For example, the following method is specifically mentioned.

First, after a predetermined time has elapsed from the start of a recording operation, the application of the first washing liquid to the adhesive layer Ad is started. The predetermined time is, for example, 30 minutes. Next, after the elapse of, for example, 30 minutes from the start of the application of the first washing liquid, the application of the first washing liquid may be stopped. Alternatively, the application of the first washing liquid may be continued even after 30 minutes have elapsed.

Note that a user can select whether to start or stop the application of the first washing liquid in accordance with an adhesive force of the adhesive layer Ad or the elapsed time at any timing before the start of a recording operation, after the end of the recording operation, or during the recording operation.

According to the present embodiment, the following effects can be obtained.

Downtime due to maintenance work or the like can be shortened, and an operation rate of the recording device 1 can be improved. Specifically, in the application section 110, the adhesive layer Ad is swelled by the first washing liquid, and a pigment coating and dirt are lifted up from the adhesive layer Ad and are easily removed. Then, the adhesive layer Ad is washed by the washing mechanism 120, so that a pigment coating and dirt are removed. Therefore, the frequency of maintenance work such as replacement of the adhesive layer Ad and replacement of the transport belt 33 is reduced, and downtime of the recording device 1 is shortened. Therefore, it is possible to provide the recording device 1 that improves an operation rate.

Since the application section 110 that applies the first washing liquid to the adhesive layer Ad and the washing mechanism 120 that washes the adhesive layer Ad are configured separately, it is easy to ensure time for the adhesive layer Ad to swell. In addition, the concentration of the first washing liquid stored in the first washing liquid tank 113 is less likely to change, and concentration management is facilitated.

Hereinafter, contents derived from the embodiment will be described.

A recording device includes a transport belt that includes an adhesive layer configured to adhere a fabric and that transports the fabric adhered to the adhesive layer; a recording section that performs recording by ejecting pigment ink onto the fabric being transported; an application section that applies, to the adhesive layer, a first washing liquid having a characteristic of swelling the adhesive layer; and a washing mechanism that is arranged ahead of the application section in a traveling direction of the transport belt and that washes the adhesive layer with a second washing liquid not having the characteristic.

According to this configuration, it is possible to improve an operation rate of the recording device by shortening downtime due to maintenance work or the like. Specifically, in the application section, the adhesive layer is swelled by the first washing liquid, and a pigment coating and dirt are lifted up from the adhesive layer and are easily removed. Then, the adhesive layer is washed by the washing mechanism, whereby a pigment coating and dirt are removed. Therefore, the frequency of maintenance work such as replacement of the adhesive layer and replacement of the transport belt is reduced, and downtime of the recording device is shortened. Therefore, it is possible to provide a recording device that improves an operation rate.

In the above-described recording device, when a direction intersecting a transport direction is defined as a width direction, the application section applies the first washing liquid to an entire region of the adhesive layer in the width direction by a contact type or a non-contact type.

According to this configuration, since the first washing liquid is applied thoroughly, a pigment coating and dirt can be easily removed over the entire region of the adhesive layer.

The above-described recording device further includes a first displacement section that changes between contact and separation of the application section with respect to the transport belt; a second displacement section that changes between contact and separation of the washing mechanism with respect to the transport belt; and a control section that individually controls the first displacement section and the second displacement section.

According to this configuration, the application section and the washing mechanism can be brought into contact with or separated from the transport belt as necessary.

In the above-described recording device, the application section includes a first washing liquid tank that stores the first washing liquid and the control section causes the application section to apply the first washing liquid to the adhesive layer during a recording operation of performing recording.

A pigment coating is formed during a recording operation. According to this configuration, the first washing liquid is applied to perform washing during the recording operation, and thus it is possible to suppress formation of a pigment coating.

In the above-described recording device, the application section includes a first washing liquid tank that stores the first washing liquid and the control section causes the application section to apply the first washing liquid to the adhesive layer in a period other than a recording operation of performing recording.

According to this configuration, by applying the first washing liquid to the adhesive layer before or after a recording operation and performing washing, the recording operation can be started with the adhesive layer in a clean state.

The above-described recording device further includes a liquid amount sensor that detects a storage amount of the first washing liquid stored in the first washing liquid tank and a notification section, wherein the control section prompts, via the notification section, replenishment of the first washing liquid to the first washing liquid tank, based on the storage amount detected by the liquid amount sensor becoming equal to or less than a threshold.

According to this configuration, a user does not need to manage a storage amount of the first washing liquid tank, and the convenience of the user is improved.

The above-described recording device further includes a liquid amount sensor that detects a storage amount of the first washing liquid stored in the first washing liquid tank and a supply section that supplies the first washing liquid to the first washing liquid tank, wherein the control section controls the supply section to supply the first washing liquid to the first washing liquid tank based on the storage amount detected by the liquid amount sensor becoming equal to or less than a threshold.

According to this configuration, the first washing liquid is automatically supplied to the first washing liquid tank, and thus the convenience of a user is improved.

The above-described recording device further includes a detection section that detects an adhesive force of the adhesive layer, wherein the control section causes the application section to apply the first washing liquid to the adhesive layer based on the adhesive force detected by the detection section becoming equal to or less than a threshold.

As formation of a pigment coating or dirt of the adhesive layer progresses, an adhesive force gradually decreases. According to this configuration, the first washing liquid is automatically applied to the adhesive layer according to a degree of a pigment coating and a contamination degree. This recovers an adhesive force of the adhesive layer, suppresses deterioration of the adhesive layer, and further improves an operation rate. Since the first washing liquid is automatically applied, the convenience of a user is improved.

The above-described recording device further includes a circulation section that circulates the first washing liquid stored in the first washing liquid tank and a filter section that filters the first washing liquid.

The first washing liquid of the adhesive layer may contain a pigment coating or dirt transferred from the adhesive layer. According to this configuration, in the above case, the first washing liquid can be filtered and circulated, and the first washing liquid can be reused.

The above-described recording device further includes a detection section that detects an adhesive force of the adhesive layer, wherein the control section controls the first displacement section to cause the application section to contact the transport belt and execute application of the first washing liquid to the adhesive layer based on the adhesive force detected by the detection section becoming equal to or less than a threshold, and controls the first displacement section to cause the application section to separate from the transport belt and stop the application of the first washing liquid to the adhesive layer based on the adhesive force detected by the detection section becoming equal to or greater than the threshold.

As formation of a pigment coating or dirt of the adhesive layer progresses, an adhesive force gradually decreases. According to this configuration, when an adhesive force decreases, that is, when a pigment coating or dirt progresses, the first washing liquid is automatically applied to the adhesive layer. When an adhesive force is recovered by applying the first washing liquid and washing, the application of the first washing liquid to the adhesive layer is automatically stopped. By these, the convenience of a user is improved, and the waste of the first washing liquid is suppressed.

In the above-described recording device, the first washing liquid does not contain a surfactant.

According to this configuration, the occurrence of foaming due to the first washing liquid is suppressed.

## Claims

1. A recording device comprising:
a transport belt that includes an adhesive layer configured to adhere a fabric and that transports the fabric adhered to the adhesive layer;
a recording section that performs recording by ejecting pigment ink onto the fabric being transported;
an application section that applies, to the adhesive layer, a first washing liquid having a characteristic of swelling the adhesive layer; and
a washing mechanism that is arranged ahead of the application section in a traveling direction of the transport belt and that washes the adhesive layer with a second washing liquid not having the characteristic.

2. The recording device according to claim 1, wherein
when a direction intersecting a transport direction of the fabric is defined as a width direction, the application section applies the first washing liquid to an entire region of the adhesive layer in the width direction by a contact type or a non-contact type.

3. The recording device according to claim 1, further comprising:
a first displacement section that changes between contact and separation of the application section with respect to the transport belt;
a second displacement section that changes between contact and separation of the washing mechanism with respect to the transport belt; and
a control section that individually controls the first displacement section and the second displacement section.

4. The recording device according to claim 3, wherein
the application section includes a first washing liquid tank that stores the first washing liquid and
the control section causes the application section to apply the first washing liquid to the adhesive layer during a recording operation of performing recording.

5. The recording device according to claim 3, wherein
the application section includes a first washing liquid tank that stores the first washing liquid and
the control section causes the application section to apply the first washing liquid to the adhesive layer in a period other than a recording operation of performing recording.

6. The recording device according to claim 4, further comprising:
a liquid amount sensor that detects a storage amount of the first washing liquid stored in the first washing liquid tank and
a notification section, wherein
the control section prompts, via the notification section, replenishment of the first washing liquid to the first washing liquid tank, based on the storage amount detected by the liquid amount sensor becoming equal to or less than a threshold.

7. The recording device according to claim 4, further comprising:
a liquid amount sensor that detects a storage amount of the first washing liquid stored in the first washing liquid tank and
a supply section that supplies the first washing liquid to the first washing liquid tank, wherein
the control section controls the supply section to supply the first washing liquid to the first washing liquid tank based on the storage amount detected by the liquid amount sensor becoming equal to or less than a threshold.

8. The recording device according to claim 3, further comprising:
a detection section that detects an adhesive force of the adhesive layer, wherein
the control section causes the application section to apply the first washing liquid to the adhesive layer based on the adhesive force detected by the detection section becoming equal to or less than a threshold.

9. The recording device according to claim 4, further comprising:
a circulation section that circulates the first washing liquid stored in the first washing liquid tank and
a filter section that filters the first washing liquid.

10. The recording device according to claim 3, further comprising:
a detection section that detects an adhesive force of the adhesive layer, wherein
the control section
controls the first displacement section to cause the application section to contact the transport belt and execute application of the first washing liquid to the adhesive layer based on the adhesive force detected by the detection section becoming equal to or less than a threshold, and
controls the first displacement section to cause the application section to separate from the transport belt and stop the application of the first washing liquid to the adhesive layer based on the adhesive force detected by the detection section becoming equal to or greater than the threshold.

11. The recording device according to claim 1, wherein
the first washing liquid does not contain a surfactant.
